# EUROPEAN PATENT SPECIFICATION

(11) **EP 4 107 564 B1**
(45) Date of publication and mention of the grant of the patent: **27.08.2025**
(21) Application number: 20706502.0
(22) Date of filing: 21.02.2020
(51) Int. Cl.: G02B 6/44

(54) **SEALING UNIT**
DICHTUNGSEINHEIT
UNITÉ D'ÉTANCHÉITÉ

(43) Date of publication of application: 28.12.2022
(73) Proprietor: Telefonaktiebolaget LM ERICSSON (PUBL), 16483 Stockholm (SE)
(72) Inventor: D'INCA', Claudio, 16152 Genova (IT); RIVARA, Angelo, 16152 Genova (IT); ASSALE, Marco, 16152 Genova (IT); MOSTI, Sergio, 16152 Genova (IT); LANZONE, Sergio, 16152 Genova (IT)
(74) Representative: Ericsson
(86) International application number: PCT/EP2020/054689
(87) International publication number: WO 2021/164890

(56) References cited:
- WO-A1-2011/047155
- WO-A1-2020/025134
- US-A1- 2008 205 843
- US-A1- 2008 253 730
- US-A1- 2009 252 472
- US-B1- 7 139 462

## Description

### Technical Field

The disclosure relates to a sealing unit, for example, for optical fibers extending into an enclosure comprising telecommunications equipment, e.g. in a Radio Access Network. The disclosure also relates to an enclosure for telecommunications equipment comprising the sealing unit.

### Background

Telecommunications equipment, for example for a Radio Access Network, may be contained within an enclosure or cabinet. The enclosure, or housing, may be installed outside and protects the telecommunications equipment from the weather. In particular, the enclosure may provide protection against ingress of contaminants, e.g. water ingress. The telecommunications equipment may be connected to other telecommunications equipment using optical fiber cables, comprising one or more optical fibers. It is necessary to provide for protection against contaminants, e.g. water, whilst allowing for installation or removal of the optical fiber cables.

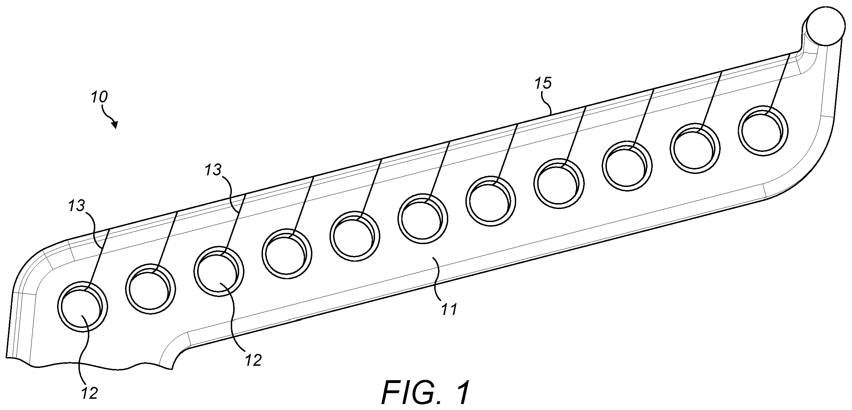

Figure 1 shows a prior art gasket 10 as part of a sealing unit for providing a seal to an enclosure. The gasket 10 provides for protection against contaminants, e.g. water, into the enclosure. The gasket 10 comprises an elongate section 11 of material comprising a plurality of apertures 12. The elongate section 11 of material is resiliently deformable. Each aperture 12 is dimensioned to tightly fit around one optical fiber cable (not shown). The apertures 12 are arranged in a line, parallel to an edge 15 of the section 11 of material. The section 11 of material comprises a plurality of slots 13 extending between each aperture 12 and the edge 15 of the section 11 of material. The slots are resiliently closed, i.e. the material separated by the slots is abutting. The slots 11 are configured to provide for an optical fiber cable to be inserted into the slot, the slot resiliently deforming to allow passage of the optical fiber cable. Once the optical fiber cable is fully in the aperture 12, the slot 13 closes, with the material 11 on either side of the slot closely abutting to prevent ingress of contaminants.

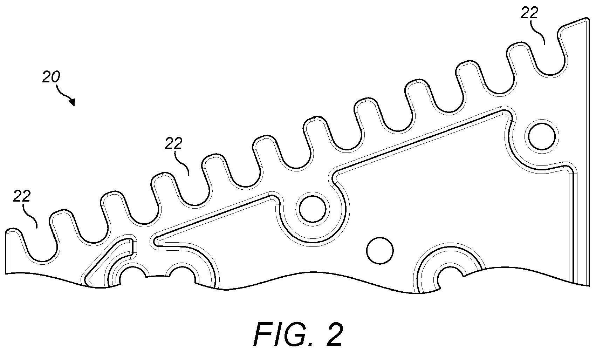

As shown in Figure 2, the sealing unit for the enclosure further comprises a retaining device 20. The retaining device 20 is configured to securely hold the optical fiber cables in place. The retaining device 20 comprises a plurality of channels 22. Each channel 22 is configured to receive one optical fiber cable. The channels 22 are dimensioned and shaped to securely hold in place an optical fiber cable, e.g. to restrain longitudinal and lateral movement of an optical fiber cable placed in the channels 22. The sealing unit for the enclosure comprises a gasket 10 and at least one retaining device 20. The apertures 12 and slots 13 of the gasket 10 are aligned with the channels 22 of the retaining device 20. Thus, the sealing unit provides for insertion and removal of fiber optical cables, and for protection against ingress of contaminants into the enclosure.

The sealing unit provides for insertion of a limited number of fiber optical cables, that depends on the length of gasket 10 and the number of apertures 12 that the gasket 10 is able to host. For telecommunications equipment to connect using additional optical fiber cables, a different solution is required.

US 2009/0252472 A1 describes a splice enclosure including sealing blocks for sealing the openings of its housing. Each sealing block defines cable ports and a slot extending from each port.

### Summary

An aspect of the disclosure provides a sealing unit for cables according to claim 1.

A further aspect of the disclosure provides an enclosure for telecommunications equipment according to claim 10.

### Brief Description of the drawings

Embodiments of the disclosure will now be described, by way of example only, with reference to the accompanying drawings.
Figure 1 is an illustration of a gasket according to the prior art;
Figure 2 is an illustration of a retaining device according to the prior art;
Figure 3 shows an illustration of a gasket part of a sealing unit according to an embodiment of the disclosure;
Figure 4 shows an illustration of a gasket part of a sealing unit according to a further embodiment of the disclosure;
Figure 5 shows an illustration of a retaining device part of a sealing unit according to an embodiment of the disclosure;
Figure 6 shows an illustration of a sealing unit according to an embodiment of the disclosure; and
Figure 7 shows a further illustration of a sealing unit according to an embodiment of the disclosure.

### Detailed description

The same reference numbers will used for corresponding features in different embodiments.

The disclosure relates to enclosure or cabinet comprising telecommunications equipment, for example for a Radio Access Network. In some examples, the telecommunications equipment comprises optical telecommunications equipment, e.g. comprising an optical interface. In some examples, cables provide for connection between parts of a radio base station, e.g. between telecommunications equipment in the enclosure and telecommunications equipment in a different enclosure or site. For example, the cables may provide a fronthaul connection for co-located or remote parts of the radio base station.

The enclosure, also referred to as a housing or cabinet, may be installed outside and provides protection for the telecommunications equipment from the weather. In particular, the enclosure may provide protection against ingress of contaminants, e.g. water ingress. The telecommunications equipment may be connected to the other telecommunications equipment using optical fiber cables comprising one or more optical fibers. The optical fiber cables may alternatively be referred to as fiber-optic cables, or as optical fibers. The enclosure provides protection against contaminants, e.g. water, whilst allowing for installation or removal of the cables, e.g. optical fiber cables.

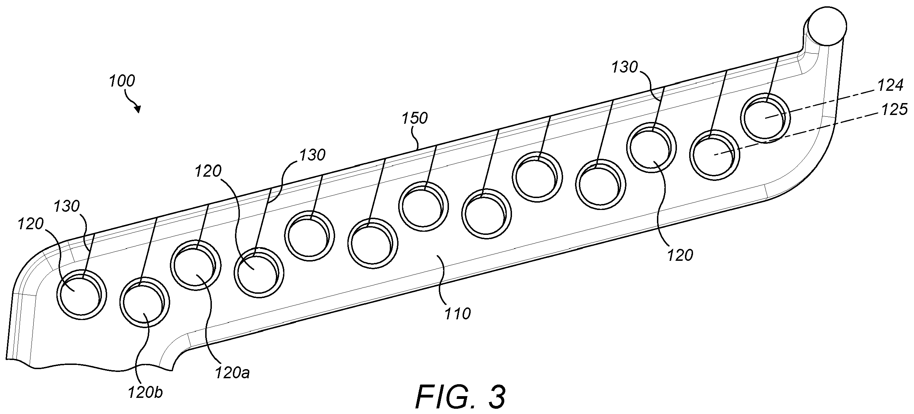

Figure 3 shows a gasket 100 as part of a sealing unit for providing a seal to an enclosure. For example, the enclosure may comprise an opening section or door (not shown). The opening section allows for access to the telecommunications equipment in the enclosure, for example, to allow cables to be connected to, or removed from, communications equipment within the enclosure. The opening section is in contact with the gasket, such that when the opening section is open, a lateral surface 150 (described below) of the gasket 100 is accessible. When the opening section is closed, the lateral surface is not accessible and the gasket 100 forms part of an outer surface of the enclosure. The opening section and gasket 100 together provide for protection against contaminants, e.g. water, into the enclosure.

The gasket 100 comprises an elongate section 110 of material comprising a plurality of apertures 120. The elongate section 110 of material is resiliently or elastically deformable, for example, made of a resiliently deformable material such as rubber or an elastomer, e.g. silicone rubber. Each aperture 120 is dimensioned to tightly fit around one optical fiber cable (shown below). In this example, the elongate section 110 has a length along a main longitudinal axis which is larger than its width. Alternatively, the length and width may be substantially the same or be in any ratio. The elongate section 110 may be referred to as a section 110.

The section 110 of material comprises a plurality of slots 130 extending between each aperture 120 and a lateral edge 150 of the section 110 of material. The slots 130 are resiliently closed, i.e. the material separated by the slots is abutting. The slots 130 are configured to provide for an optical fiber cable to be inserted through the slot 130 and into the connected aperture 120. A slot 130 (i.e. the material around the slots) is resiliently deformable to allow passage of a cable, e.g. an optical fiber cable. Once the optical fiber cable is fully in the aperture 120, the slot 130 elastically closes, with the material 110 on either side of the slot closely abutting to prevent ingress of contaminants. The elastic property of the section 110 provides for elastic deformation of the material around the slot 130, such that the slot closes and re-seals once the fiber optical cable has passed through the slot 130 and into the aperture 120 or out of the gasket. As such, it is intended that an optical fiber cable is inserted into the gasket 100 in a lateral direction, e.g. approximately vertically downward as shown, through one of the slots 130. Thus, it is not necessary to insert the optical fiber cable longitudinally directly into the aperture 120, which may not be possible due to a plug on an end of the optical fiber cable.

According to the claimed invention, the slots 130 do not extend perpendicularly to the longitudinal axis of the section 110. Instead, the slots 130 extend an angle to a perpendicular to the longitudinal axis of the section 110. As such, the slots 130 do not extend on the shortest line between the apertures 120 and the lateral edge 150. The slots 130 extend at an angle to the longitudinal axis of the section 110, i.e. extend between the longitudinal axis of the section 110 and its perpendicular direction. The slots 130 may be straight as shown, or may be curved.

The plurality of apertures 120 are arranged in a two-dimensional array. The plurality of apertures 120 are located at different distances to the lateral edge 150, onto which the slots 130 extend. The two-dimensional array may be considered as a dimension along the longitudinal or main axis of the gasket 100 and a dimension perpendicular, i.e. to the lateral edge 150. As such, the length of the slots 130 are different for apertures 120 which are located at different distances to the lateral edge 150. In the example shown, the slots 130 are substantially parallel to each other. The slots 130 extend to the same lateral edge 150.

In some examples, the plurality of the apertures 120 vary in distance from an aperture 120 which is adjacent along a length (axis) of the lateral edge 150 or section 110 of material. As such, for at least some of the apertures 120, adjacent apertures 120 are not at the same distance to the lateral edge 150. Apertures 120a are closer to the lateral edge 150 than adjacent apertures 120b. The distance of adjacent apertures 120 does not increase in a monotonic function. Instead, the distance of adjacent apertures 120 from the lateral edge 150 is a non-monotonic function, e.g. the distance increases and decreases, e.g. alternates between two or more values. The alternating distances of the adjacent apertures 120a,120b means that the length of the slots 130 does not increase over the gasket 110, instead the lengths of the slots 130 also alternates. Adjacent apertures 120 are offset from each other, e.g. in a direction towards the lateral edge. The two-dimensional array has a substantially elongate shape, extending with a long axis along the elongate section 110 of elastic material. The apertures 120 are independently accessible. For example, the gasket 100 allows any optical fiber cable to be inserted or removed in any order, i.e. it is not necessary to add or remove an optical fiber cable into a particular aperture 120 before another aperture 120.

The distance between the aperture 120 and lateral edge 150 may refer to a length of the connecting slot 130 or may refer to a direct distance independent of the length of the connecting slot. Slots 130 of apertures 120b which are relatively far from the lateral edge 150 may pass near to, or between, apertures 120a which are relatively close to the lateral edge 150. The two-dimensional array is shown as being a regular array, although the array may not be regular or have a different pattern.

In some examples, the apertures 120 comprise apertures 120a arranged along a first line 124 and apertures 120b arranged along a second line 125. The first and second lines 124,125 are substantially parallel to each other and to the lateral edge 150 of the section 110 of material. The first line 124 and second line 125 are different distances to the lateral edge 150. In this example, the first line 124 is closer to the second line 125. Thus, the length of the slots 130 for the apertures 120 of the first line 124 are shorter than the length of the slots 130 for the apertures 120 of the second line 125. Along the length of the lateral edge, or axis of the elongate section 110 of material, the apertures 120 alternate between the being located on the first line 124 and second line 125. As such, the distance of adjacent apertures 120 to the lateral edge 150 alternates between two different distances. The slots 130 of the second line 125 pass between apertures 120 of the first line 124. In some examples, the apertures 120 may be arranged in two, three or more lines, or in a different pattern without lines defining a regular array. In this example, the distance of the apertures 120 from the lateral edge 150 alternates between the, for example three, different distances.

The arrangement of apertures 120 in a two-dimensional array provides for the additional apertures to be located in a same length of the section 110 of material. The density of the apertures 120 per unit length of the section 110 of material (or unit length of lateral edge) is higher than apertures arranged in a single line as described for the prior art. The increased density of apertures is achieved with the same separation between adjacent apertures 120. As such, the structural integrity of the resilient section 110 of material is maintained with the higher density of apertures, by arranging the apertures in a two-dimensional array as described. In particular, it has been realized that the resilient material required for sealing and to allow insertion of the cables through the slots 130 would not have the physical strength to operate without breaking if the apertures 120 were to be arranged in a single line with the density provided by the example of Figure 3. Alternatively, the disclosure may be seen as increasing a separation of apertures 120 for the same density per unit length of gasket 100, or a combination thereof.

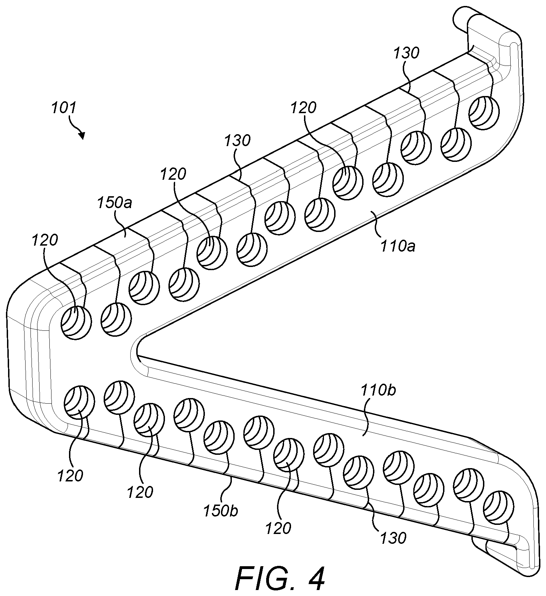

Figure 4 shows a further example of gasket 101. The gasket 101 comprises apertures 120, connected with slots 130 to an adjacent lateral surface, as described. The gasket 101 is substantially shaped with a V-shape, having two sections 110a, 110b of resilient material. Each section 110a, 110b is as described for the section 110 above. Each section 110a, 110b comprises a two-dimensional array of apertures 120 connected to an adjacent lateral surface 150a, 150b by slots 130 as described above. As above, each section 110a, 110b provides for an increased density in apertures for the length of each section 110a, 110b. The lateral edges 150a,150b are one or more exterior facing sides of the V-shape. Further details of the gasket 101 are as described for the gasket 100.

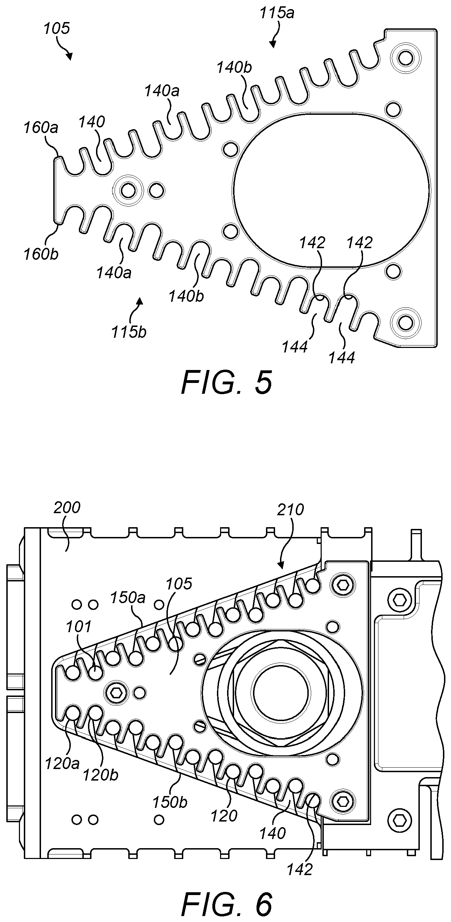

Figure 5 shows a retaining device 105, which is a further part of the sealing unit for the enclosure. In some examples, the sealing unit for the enclosure comprises a gasket 100;101 and at least one retaining device 105.The retaining device 105 is configured to securely hold the optical fiber cables in place. Alternatively, the sealing unit may be considered as only the gasket of any example.

An example retaining device 105 comprises a plurality of channels 140. Each channel 140 is configured to receive one cable, e.g. optical fiber cable. The channels 140 are dimensioned and shaped to securely hold in place an optical fiber cable, e.g. to restrain longitudinal and/or lateral movement of an optical fiber cable placed in the channel 140. The apertures 120 and slots 130 of the gasket 100;101 are aligned with the channels 140 of the retaining device 105. A cable inserted into a slot 130 of the gasket is substantially simultaneously inserted into the aligned channel 140 of the retaining device 105. Thus, the sealing unit provides for insertion and removal of optical fiber cable, and for protection against ingress of contaminants into the enclosure.

In the example shown, the retaining device 105 has a V-shape, matching the V-shape of the gasket 101 described above. The retaining device 105 comprises a first section 115a corresponding to the first section 110a of gasket and a second section 115b corresponding to the second section 110b of gasket. Alternatively, the retaining device 105 has a shape which matches a different shape of gasket, e.g. gasket 100, or matches only a part of a gasket.

The channels 140 have a proximal end 144 at a lateral edge 160a, 160b of the retaining device 105 and a distal end 142 at a far end of the channel. The channels 140 are configured to secure the cables in position at a particular securing position within the channel, which in this example, is the distal end 142 of the channel. In this example, the distal end 142 of the channels 140 are rounded to securely receive the optical fiber cables in the secured position. The sealing unit comprises a retaining device 105 with channels 140 which are aligned with and match slots 130 of the gasket, and securing positions 142 which are aligned with and match apertures 120 of the gasket.

The retaining device 105 comprises a plurality of channels 140 having different depths, i.e. the distance from the lateral edge 160a, 160b of the retaining device 105 to the securing position, i.e. distal end 142 of the channel. The different depths of channel 140 correspond to the different locations of the apertures 120 in the gasket. For example, the retaining device 105 comprises first channels 140a which have a relatively short depth, i.e. the securing position is relatively close to the lateral edge 160a, 160b. The distal end 142 of the channels 140a corresponds to a position of the apertures 120a located on the first line 124 of the gasket 100;101. The retaining device 105 further comprises second channels 140b which have a relatively large depth, i.e. the securing position is relatively far from the lateral edge 160a, 160b. The distal end of the channels 140b corresponds to a position of the apertures 120b located on the second line 125 of the gasket 100;101.

A fiber optical cable inserted into any aperture 120 is retained in place by a corresponding channel 140a,140b of the retaining device 105. The retaining device is configured to secure the optical fiber cables in the location of the apertures 120. The retaining device 105 comprises a plurality of channels 140, wherein each channel 140 has a securing position 142 aligned with the apertures 120. The securing positions 142 are arranged in a two-dimensional array, i.e. corresponding with the two-dimensional array of the apertures 120.

The channels 140 have been described as securing the fiber optical cables at a distal end 142. In other examples, the channels 140 may secure the fiber optical cables at any point.

The proposed solution allows to keep the cables locked in an intended position, providing for weatherproofing (e.g. waterproofing) of the enclosure and with a higher density in the same space. This allows to have a higher density of fibers keeping the design of the overall system, for example, the enclosure does not require modification. In some examples, a prior art design may provide for 22 fiber optical cables, and the present disclosure provides for 26 fiber optical cables. Although the disclosure has been described for fiber optical cables, the present disclosure may be applicable to other types of cable, e.g. electrical cables. References to fiber optical cables may be considered as a reference to a cable of any type.

Figure 6 provides an example of part of an enclosure 200 for telecommunications equipment, e.g. optical telecommunications equipment. The enclosure 200 comprises a sealing unit 210, the sealing unit 210 comprising the gasket 101 and retaining device 105 as described according to any example. The sealing unit 210 is attached to the enclosure, e.g. on an edge of an opening section or door of the enclosure. The gasket 101 and retaining device 105 are fixed to each other, and/or fixed to the enclosure, to have a fixed position to each other. The apertures 120 of the gasket 101 are aligned with the securing positions, i.e. distal ends 142, of the channels 140 of the retaining device 105. The gasket 101 comprises adjacent apertures 120a, 120b which are offset from each other, i.e. at different distances from the lateral edge 150a, 150b. The securing positions 142 of the retaining device 105 are corresponding also offset from each other. Thus, the enclosure 200 can be sealed with the optical fiber cables secured in a two-dimensional array. The two-dimensional array extends on one or more substantially elongate sections 110 of gasket.

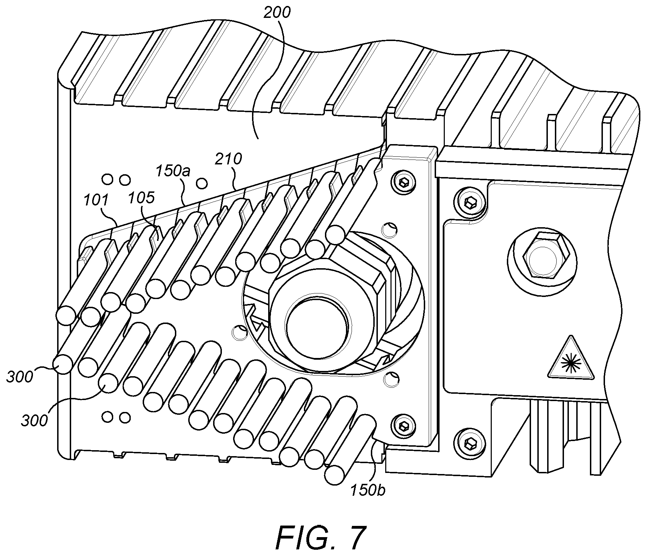

Figure 7 provides a further example of part of the enclosure 200 for telecommunications equipment. The enclosure 200 comprises the sealing unit 210, the sealing unit 210 comprising the gasket 101 and retaining device 105 as described according to any example. In this example, a plurality of cables 300 are installed in the sealing unit 210. The cables 300 have been inserted into apertures 120a,120b having different distances to the lateral edge 150a,150b. The optical fiber cables 300 are securely held in place by the retaining device 105, located on an exterior of the gasket 101. Alternatively, the retaining device 105 may be on an interior side of the gasket 101.

## Claims

1. A sealing unit (210) for cables extending into an enclosure comprising telecommunications equipment;
the sealing unit (210) comprising a gasket (101) having:
an elongate section (110) of resilient material comprising a plurality of apertures (120), wherein each aperture is arranged to receive a cable (300);
the elongate section (110) comprising slots (130) connecting the apertures (120) to a lateral edge (150) of the elongate section (110),
wherein the slots (130) extend at an angle to a perpendicular to a longitudinal axis of the elongate section (110) and the resilient material, separated by the slots (130), is abutting; wherein the apertures (120) are arranged in a two-dimensional array;
and wherein the elongate section (110) is resiliently deformable around the slots (130) to provide for a cable to pass through the slot and re-seal after the cable has passed through the slot.

2. The sealing unit as claimed in claim 1, wherein a distance of the apertures (120) from the lateral edge (150) alternates along the elongate section between a first distance and a second distance.

3. The sealing unit as claimed in claim 1 or 2, wherein the apertures (120) are arranged in a two-dimensional array on a first line (124) and a second line (125), wherein the first line and second line are substantially parallel to the lateral edge (150) of the elongate section.

4. The sealing unit as claimed in any one of the preceding claims, wherein the plurality of slots (130) are substantially parallel to each other.

5. The sealing unit as claimed in any one of the preceding claims, further comprising one or more retaining device (105), the retaining device configured to secure the cables in the location of the apertures (120).

6. The sealing unit as claimed in claim 5, wherein the retaining device (105) comprises a plurality of channels (140), wherein each channel has a securing position (142) aligned with the location of the apertures (120) of the gasket in the two-dimensional array.

7. The sealing unit as claimed in claim 6, wherein the securing position (142) is at an end of the channel (140) distal to the lateral edge of the gasket.

8. The sealing unit as claimed in any one of the preceding claims, wherein the sealing unit (210) has a V-shape, and the lateral edge (150) is one or more exterior facing sides of the V-shape.

9. The sealing unit as claimed in any one of the preceding claims wherein the cables (300) are optical fiber cables.

10. An enclosure (200) for telecommunications equipment comprising the sealing unit (210) of any preceding claim.

11. The enclosure as claimed in claim 10, wherein the enclosure (200) comprises telecommunications equipment.

12. The enclosure as claimed in claim 11, wherein the cables (300) are optical fiber cables and the telecommunications equipment comprises optical telecommunications equipment.

## Patentansprüche

1. Dichtungseinheit (210) für Kabel, die sich in ein Gehäuse mit Telekommunikationsausrüstung erstrecken;
wobei die Dichtungseinheit (210) eine Dichtung (101) umfasst, die Folgendes aufweist:
einen länglichen Abschnitt (110) aus einem elastischen Material, der eine Vielzahl von Öffnungen (120) umfasst, wobei jede Öffnung dazu angeordnet ist, ein Kabel (300) aufzunehmen;
wobei der längliche Abschnitt (110) Schlitze (130) umfasst, welche die Öffnungen (120) mit einem seitlichen Rand (150) des länglichen Abschnitts (110) verbinden, wobei sich die Schlitze (130) in einem Winkel zu einer Senkrechten zu einer Längsachse des länglichen Abschnitts (110) erstrecken und das elastische Material, das durch die Schlitze (130) getrennt ist, anliegt;
wobei die Öffnungen (120) in einer zweidimensionalen Reihe angeordnet sind;
und wobei der längliche Abschnitt (110) um die Schlitze (130) herum elastisch verformbar ist, um den Durchgang eines Kabels durch den Schlitz zu ermöglichen und nach dem Durchgang des Kabels durch den Schlitz wieder zu verschließen.

2. Dichtungseinheit nach Anspruch 1, wobei ein Abstand der Öffnungen (120) von dem seitlichen Rand (150) entlang des länglichen Abschnitts zwischen einem ersten Abstand und einem zweiten Abstand wechselt.

3. Dichtungseinheit nach Anspruch 1 oder 2, wobei die Öffnungen (120) in einer zweidimensionalen Reihe auf einer ersten Linie (124) und einer zweiten Linie (125) angeordnet sind, wobei die erste Linie und die zweite Linie im Wesentlichen parallel zu dem seitlichen Rand (150) des länglichen Abschnitts sind.

4. Dichtungseinheit nach einem der vorhergehenden Ansprüche, wobei die Vielzahl der Schlitze (130) im Wesentlichen parallel zueinander ist.

5. Dichtungseinheit nach einem der vorhergehenden Ansprüche, ferner umfassend eine oder mehrere Haltevorrichtungen (105), wobei die Haltevorrichtung dazu konfiguriert ist, die Kabel an der Stelle der Öffnungen (120) zu befestigen.

6. Dichtungseinheit nach Anspruch 5, wobei die Haltevorrichtung (105) eine Vielzahl von Kanälen (140) umfasst, wobei jeder Kanal eine Befestigungsposition (142) aufweist, die auf die Stelle der Öffnungen (120) der Dichtung in der zweidimensionalen Reihe ausgerichtet ist.

7. Dichtungseinheit nach Anspruch 6, wobei die Befestigungsposition (142) an einem Ende des Kanals (140) distal zu dem seitlichen Rand der Dichtung ist.

8. Dichtungseinheit nach einem der vorhergehenden Ansprüche, wobei die Dichtungseinheit (210) eine V-Form aufweist und der seitliche Rand (150) eine oder mehrere nach außen gerichtete Seiten der V-Form ist.

9. Dichtungseinheit nach einem der vorhergehenden Ansprüche, wobei die Kabel (300) Glasfaserkabel sind.

10. Gehäuse (200) für Telekommunikationsausrüstung, umfassend die Dichtungseinheit (210) nach einem der vorhergehenden Ansprüche.

11. Gehäuse nach Anspruch 10, wobei das Gehäuse (200) Telekommunikationsausrüstung umfasst.

12. Gehäuse nach Anspruch 11, wobei die Kabel (300) Glasfaserkabel sind und die Telekommunikationsausrüstung optische Telekommunikationsausrüstung umfasst.

## Revendications

1. Unité d'étanchéité (210) pour câbles s'étendant dans une enceinte comprenant un équipement de télécommunications ;
l'unité d'étanchéité (210) comprenant un joint (101) ayant :
une section allongée (110) en matériau résilient comprenant une pluralité d'ouvertures (120), chaque ouverture étant agencée pour recevoir un câble (300) ;
la section allongée (110) comprenant des fentes (130) reliant les ouvertures (120) à un bord latéral (150) de la section allongée (110), dans laquelle les fentes (130) s'étendent à un angle par rapport à une perpendiculaire à un axe longitudinal de la section allongée (110) et le matériau résilient, séparé par les fentes (130), est en butée ;
dans lequel les ouvertures (120) sont agencées selon un réseau bidimensionnel ;
et dans lequel la section allongée (110) est déformable de manière résiliente autour des fentes (130) pour permettre à un câble de passer à travers la fente et de se refermer après que le câble a traversé la fente.

2. Unité d'étanchéité selon la revendication 1, dans laquelle une distance des ouvertures (120) à partir du bord latéral (150) alterne le long de la section allongée entre une première distance et une seconde distance.

3. Unité d'étanchéité selon la revendication 1 ou 2, dans laquelle les ouvertures (120) sont agencées selon un réseau bidimensionnel sur une première ligne (124) et une seconde ligne (125), la première ligne et la seconde ligne étant sensiblement parallèles au bord latéral (150) de la section allongée.

4. Unité d'étanchéité selon l'une quelconque des revendications précédentes, dans laquelle la pluralité de fentes (130) sont sensiblement parallèles les unes aux autres.

5. Unité d'étanchéité selon l'une quelconque des revendications précédentes, comprenant en outre un ou plusieurs dispositifs de retenue (105), le dispositif de retenue étant configuré pour fixer les câbles à l'emplacement des ouvertures (120).

6. Unité d'étanchéité selon la revendication 5, dans laquelle le dispositif de retenue (105) comprend une pluralité de canaux (140), chaque canal ayant une position de fixation (142) alignée avec l'emplacement des ouvertures (120) du joint dans le réseau bidimensionnel.

7. Unité d'étanchéité selon la revendication 6, dans laquelle la position de fixation (142) se trouve à une extrémité du canal (140) distale par rapport au bord latéral du joint.

8. Unité d'étanchéité selon l'une quelconque des revendications précédentes, dans laquelle l'unité d'étanchéité (210) a une forme en V, et le bord latéral (150) est un ou plusieurs côtés extérieurs de la forme en V.

9. Unité d'étanchéité selon l'une quelconque des revendications précédentes, dans laquelle les câbles (300) sont des câbles à fibres optiques.

10. Enceinte (200) pour équipement de télécommunications comprenant l'unité d'étanchéité (210) selon l'une quelconque des revendications précédentes.

11. Enceinte selon la revendication 10, dans laquelle l'enceinte (200) comprend un équipement de télécommunications.

12. Enceinte selon la revendication 11, dans laquelle les câbles (300) sont des câbles à fibres optiques et l'équipement de télécommunication comprend un équipement de télécommunication optique.
